# EUROPEAN PATENT SPECIFICATION

(11) **EP 1 838 070 B1**
(45) Date of publication and mention of the grant of the patent: **07.09.2011**
(21) Application number: 07104512.4
(22) Date of filing: 20.03.2007
(51) Int. Cl.: H04L 29/06

(54) **Monitoring device for the forced centralization of selected traffic in a node of an IP network**
Überwachungsvorrichtung zur Zentralisierung von ausgewähltem Verkehr in einem Knoten eines IP-Netzes
Dispositif de contrôle pour la centralisation forcée de trafics sélectionnés dans un n?ud d'un réseau IP

(30) Priority: 20.03.2006 FR 0650949
(43) Date of publication of application: 26.09.2007
(73) Proprietor: ALCATEL, 75008 Paris (FR)
(72) Inventor: Toth, Alexander, 91100, Villabe (FR)
(74) Representative: El Manouni, Josiane

(56) References cited:
- US-A1- 2001 053 694
- US-A1- 2004 095 913
- US-A1- 2006 018 291

## Description

The invention concerns Internet Protocol (IP) communication networks, and more precisely monitoring certain traffic within such IP networks.

Here "IP network" means a federation of "local" subnetworks interconnected by means of equipments forming nodes, such as routers, for example.

As the man skilled in the art knows, each communication terminal that may be connected to an IP network and which supports "Mobile IP" type mobility has an IP home address that corresponds to the prefix of the home subnetwork (or "home subnet") to which it is usually attached (in the logical sense of the term). Each home subnetwork has at least one home node, such as a router, for example, that constitutes a home agent for each terminal that is registered with it as their home node.

It must be remembered that a home agent is a node to which all packets of data (or datagrams) are initially routed that are intended for a terminal that is registered with it as their home node and is responsible for routing those packets to that terminal, whether it be connected to its home subnetwork or to a remote or foreign subnetwork (or "foreign subset").

Consequently, under normal operating conditions all IP traffic intended for a terminal having an IP home address necessarily passes through the home node that constitutes its home agent. As described in the patent document US 2006/018291, because of the centralization of the traffic at a home node, it is therefore possible, if necessary, to observe there the traffic that is associated with a selected IP source address and/or a selected IP destination address.

However, certain specific messages, such as HoTI (standing for "Home Test Init") messages defined in the IETF specifications RFC 37T5, enable a mobile terminal that is attached to a foreign subnetwork to switch from a centralized transmission mode (i.e. transmission via its home node) to a decentralized transmission mode (i.e. transmission avoiding its home node). In this case, it is very difficult, or even impossible, to observe the traffic that this mobile terminal exchanges with another terminal.

Thus an object of the invention is to remedy this drawback.

To this end it proposes a device for monitoring traffic reaching a home node constituting in an Internet Protocol communication network the home agent of at least one mobile first communication terminal having a first IP address and temporarily attached to a foreign subnetwork.

This monitoring device is characterized in that it comprises monitoring means responsible, each time their home node receives a first message associated with a first (source) lP address of the mobile first terminal and a second (destination) IP address of a second communication terminal and requesting the setting up of decentralized traffic between the first and second terminals, to verify if the first IP address corresponds to an IP address from a list of chosen lP addresses and, in the case where there is a correspondence, i) to prohibit their home node from transmitting the first received message to the second (destination) IP address, ii) to generate a response message indicating that the second terminal cannot satisfy the first message and associated with a destination IP address equal to the first IP address, and iii) to order their home node to transmit that response message to the first IP address.

The device according to the invention may have other features and in particular, separately or in combination:
- its monitoring means may be responsible for associating with at least some of the response messages a source IP address equal to the second IP address of the second communication terminal;
- its monitoring means may be responsible for monitoring first messages of HoTl (Home Test Init) type;
- its monitoring means may be responsible for generating response messages of ICMP (standing for "Internet Control Message Protocol") error message type; for example, the ICMP error messages may include a parameter problem, code 1;
- it may comprise memory means responsible for storing the chosen list of IP addresses;
- its monitoring means may be responsible for accessing memory means installed in their home node and in which the chosen list of IP addresses is stored;
- the chosen list of IP addresses may for example transmitted by a remote application (i.e. one external to the home node).

The invention also proposes a node, for example an access router of an IP network, equipped with a monitoring device of the type described hereinabove.

Other features and advantages of the invention will become apparent on reading the following detailed description and examining the appended drawings, in which:
- figure 1 is a functional diagram of a portion of an IP network equipped with access routers each provided with one embodiment of a monitoring device according to the invention, and
- figure 2 is a diagram showing the messages exchanged between first and second terminals and a home access router in the case of detection of a correspondence with a list of IP addresses (arrow F5) and in the absence of correspondence with a list of IP addresses (arrows F3 and F4).

An object of the invention is to prevent mobile terminals whose IP addresses are part of a chosen list of IP addresses and that are temporarily attached to foreign subnetworks to switch to a decentralized transmission mode in which the traffic that they exchange can no longer be observed at the level of home nodes of an IP network.

It is considered hereinafter, by way of illustrative and nonlimiting example, that the IP network is of lPv6 type. The invention is not limited to this type of IP network, however. In fact it concerns all IP networks and especially those of type lPv4.

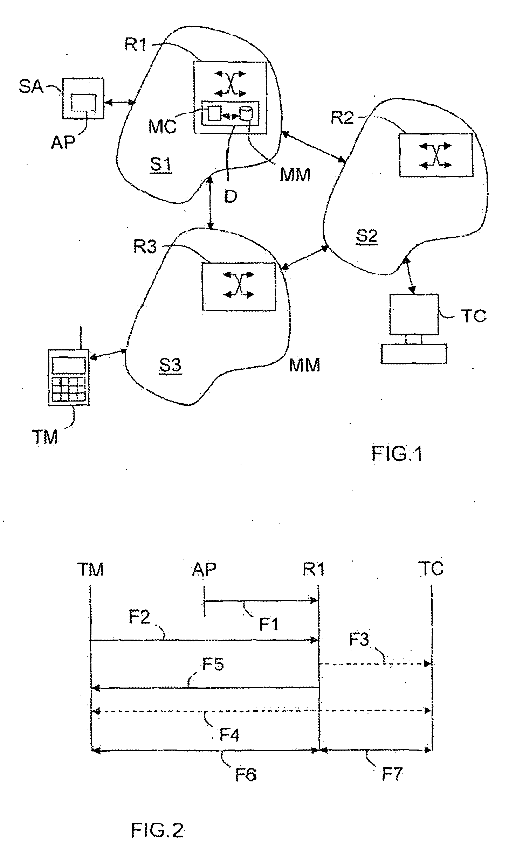

As shown diagrammatically in figure 1, an IP network may be considered as a federation of "local" subnetworks Sk (here k = 1 to 3, but may take any value greater than or equal to 2), interconnected by routers.

Each subnetwork Sk comprises nodes Rj, such as routers, at least one of which may define a home agent for at least one mobile communication terminal TM.

For example, the subnetwork S1 constitutes the home subnetwork (or "home subnet") for the mobile communication terminal TM.

Here "home subnetwork" means the subnetwork to which a mobile terminal TM is usually (logically) attached, i.e. that with which it is registered as their home network and has an IP home address that corresponds to its prefix.

Each mobile terminal TM is associated with (attached to) a home node (for example a router) Rj (here j = 1 to 3) of its home subnetwork Sk, which constitutes it home agent. The lP home address of a mobile terminal TM is therefore registered with a home node Rj (here R1).

As a general rule, the home node (router) R1 stores all of any position (and location) information in respect of the mobile terminal TM that is associated with it, i.e. the mobility data that concerns it, and serves as a transit point for packets of data (or datagrams) that must be transmitted to it, whether it is connected to its home subnetwork (for example S1 in the case of the mobile terminal TM) or to a remote or foreign subnetwork (or "foreign subnet") (for example S2 or S3 in the case of the mobile terminal TM).

Consequently, under normal operating conditions all IP traffic intended for the mobile terminal TM necessarily passes through the home node R1 that constitutes its home agent.

The invention relates to any type of mobile (or portable or cellular) communication terminal provided that it is equipped to access an IP network and has an IP home address (or home address) and one or more complementary IP addresses (or "care-of addresses" in the case of "Mobile IP" type mobility). Consequently, the mobile terminals may be mobile (or cellular) telephones, for example, communicating personal digital assistants (or PDA), or portable computers (or "laptops"), what is important being that they have an IP home address, at least one IP complementary address (or care-of address) and support mobility, for example of Mobile IP type. Such mobile (or portable) terminals are generally called mobile nodes.

The (first) mobile terminal TM is considered hereinafter, by way of illustrative and nonlimiting example, to be a mobile telephone (supporting mobility, for example of Mobile IP type).

The invention proposes to install in (or to couple to) at least some of the nodes Rj of the IP network, that constitute home agents, a monitoring device D. In the example shown in figure 1, only the node R1 is equipped with a monitoring device D because it constitutes the home agent of the mobile terminal TM. This does not prevent other nodes (not shown) of at least one of the subnetworks Sk from being equipped with a monitoring device D.

Each monitoring device D comprises at least one monitoring module MC responsible for monitoring all the streams (or traffic) that reach its home node Rj, in order to detect (for example by means of an ACL (standing for "Access Control List") mechanism) those that comprise messages of a chosen type, here called "first messages".

Here "first message" means a data message which, on the one hand, is associated with a first (source) IP address of a mobile first terminal TM (which sent it) and a second (destination) IP address of a second terminal TC (which is its destination), and, on the other hand, requires the setting up of decentralized traffic between these first and second terminals.

The (second) terminal TC is considered hereinafter, by way of illustrative and nonlimiting example, to be a fixed computer having a second IP address and attached to the subnetwork S2.

It is important to note that the invention does not concern only mobile first terminals TM that are temporarily attached to a foreign subnetwork remote from their home subnetwork. In the example shown in figure 1, the mobile first terminal TM is temporarily attached to the foreign subnetwork S3.

The second terminal TC is considered here to be the correspondent of the mobile first terminal TM. Consequently, it may be lumped together with its second IP address.

Moreover, here "decentralized traffic" means end-to-end type traffic set up between the terminals TM and TC, without passing through the home node R1 that constitutes the home agent of TM.

By way of illustrative and nonlimiting example, a first message may be of the HoTl ("Home Test Init") type. This type of message is defined in particular in chapter 5.2.5 of the IETF specifications RFC 3775. It forms part of and begins the procedure for setting up a call with a correspondent (here TC) without passing through the home agent (here R1) of a mobile terminal TM.

Each time that the monitoring module MC detects the arrival of a first message at its home node R1, it verifies if the first IP address that is associated with this first message corresponds to an address contained in a list of chosen IP addresses.

That list contains IP addresses of terminals Ti that must be kept under surveillance or monitored locally, possibly for legal reasons, but not necessarily so. It is preferably stored in memory means MM that form an integral part of the device D (as shown in figure 1) or that are installed in the home node R1 that contains the device D (but externally of the latter). These memory means MM take the form of a memory or a database, for example.

The list is transmitted to a home node Rj by means of a specific application AP, for example, which is installed in an application server SA, for example, connected to the subnetwork S1, for example (as in the figure 1 example). This in particular enables it to be updated when required.

Once received by a home node Rj, the list is then stored in the memory means MM provided for this purpose, where applicable instead of the old list.

The lists preferably vary from one home node to the other.

The address verification preferably applies to the IP home address of the mobile first terminal TM, which constitutes the first (source) IP address contained in the first message. However, it could equally apply to the IP complementary address (or care-of address) of the mobile first terminal TM, which is usually also contained in the first message.

Consequently, a list preferably includes only IP home addresses.

The home node has IP home addresses of all the mobile terminals that are attached to it and IP complementary addresses (or care-of addresses) that correspond to them. Consequently, if the list comprises only IP home addresses and detection applies to the IP complementary addresses or the IP home addresses, of course, and the first message includes only the IP complementary address of the mobile first terminal TM, the monitoring module MC may be adapted to determine from the home node with which it is associated the IP home address that corresponds to the first IP complementary address contained in a first received message. It can then verify if that IP home address forms part of the list. In particular this enables the writing of ACLs with the IP complementary addresses (which are the source addresses of the first messages). In fact, the IP home address is contained in the content of the packet and not in the source or destination address field of a first message.

If the first IP address associated with a first detected message does not correspond to one of the addresses from the list stored in the memory means MM, the monitoring module MC authorizes its home node Rj (for example R1 if the sender of the first message is TM) to route this first message to the second terminal (for example TC) that is designated by the second (destination) IP address with which it is associated. The mobile first terminal TM can then switch to a decentralized transmission mode in which the data that it exchanges with its correspondent (here TC) no longer passes through its home agent R1. It can then communicate in end-to-end mode with the second terminal TC.

It is important to note that if the second terminal TC is mobile and temporarily attached to a foreign subnetwork (for example S1 or S3), its user may equally wish to switch to the decentralized transmission mode, in order for the data that he exchanges with its correspondent TM no longer to pass through his own home agent R2. The terminal TC must then proceed as if it were a mobile first terminal and generate a first message to the corresponding terminal (here TM) that is then processed by the home node that constitutes its home agent, as indicated hereinabove for TM.

On the other hand, if the first IP address associated with a first detected message corresponds to one of the addresses from the list stored in the memory means MM, the monitoring module MC prohibits its home node Rj (for example R1 if the sender of the first message is TM) from transmitting the first received message to the second (destination) IP address that is associated with it. The home node Rj then extracts the first message in order to prevent its transmission to the second terminal TC.

Then (or substantially simultaneously), the monitoring module MC generates a response message intended to inform the mobile first terminal TM, the source of the first received message, the second terminal TC, the destination of said first message, cannot satisfy (or respond to) said first message. It therefore associates with this response message at least one IP destination address that is identical to the first IP address associated with the first message. The monitoring module MC then orders its home node Rj (here R1) to transmit (to route) this response message to the first IP address, i.e. to the mobile first terminal TM, the source of the first received message.

The monitoring module MC preferably also associates with the response message the second IP address that was associated with the first received message, by way of source IP address. Accordingly, the home node Rj (here R1), which sends the response message, passes itself off as the second terminal TC, the destination of the first message.

By way of illustrative and nonlimiting example, a response message may be an ICMP (standing for "Internet Control Message Protocol") type error message. More precisely, the error message that is generated by the monitoring module MC may include a parameter problem, Code 1. This type of ICMP error message is defined in particular In chapter 11.3.5 of the IETF specifications RFC 3775. It is intended to explain in normal operation that the correspondent TC does not support what the mobile first terminal TM is requesting. In the context of the invention, this error message is intended to indicate that the correspondent TC does not support decentralized communication and therefore that the communication with the mobile first terminal TM must continue via the home agent R1 of the latter. It must be remembered that the ICMP is adapted to transfer errors or diagnoses between communicating equipments.

On reception of a response message (for example of ICMP error message type), the mobile first terminal TM is then persuaded that the second terminal TC is unable to operate in decentralized transmission mode, so that its user must either interrupt the sending of packets of data to the second terminal TC so that their content cannot be analyzed or monitored at the level of the home node R1 of the first terminal TM, or continue to transmit packets of data to the second terminal TC, in centralized transmission mode, knowing that there is a risk of their content being analyzed or monitored at the level of the home node R1 of the mobile first terminal TM.

Reference is made now to figure 2 in order to summarize the various messages that are exchanged in the context of the invention between a mobile first terminal TM, a second terminal TC and a home node R1 constituting the home agent of the mobile first terminal TM.

In a preliminary phase (arrow F1), a list of chosen IP addresses is transmitted to the home node R1, for example by an application AP running on an application server SA connected to the IP network (here to the subnetwork S1, for example). This list is stored in memory means MM of the device D (or of the home node R1).

Then, the mobile first terminal TM (of mobile telephone type, for example), attached to a foreign subnetwork (here S3), transmits a first message to the second terminal TC (for example of fixed computer type). This first message being associated with the first IP address of the mobile first terminal TM, it is therefore routed to its home agent (arrow F2), i.e. the home node R1 (here a router of the subnetwork S1, for example).

When this first message reaches the home node R1, the monitoring device D, which is associated with it, detects it by means of its monitoring module MC. The latter then accesses the memory means MM in order to verify if the first IP address that is associated with the first message corresponds to one of the addresses from the list that they are storing.

If this is not the case, the monitoring module MC authorizes the home node R1 to route the first message to the second terminal TC (designated by the second (destination) IP address with which it is associated). The home node R1 then transmits the first message to the second terminal TC (arrow F3). The mobile first terminal TM can then switch to the decentralized transmission mode, i.e. transmission without passing through its home node R1, if the second terminal TC accepts this (arrow F4).

On the other hand, if the first IP address, associated with the first message detected, corresponds to one of the addresses from the list, the monitoring module MC prohibits the home node R1 from transmitting the first message to the second terminal TC (designated by the second (destination) IP address with which it is associated). The home node R1 then extracts the first message in order to eliminate it. Then (or substantially simultaneously), the monitoring module MC generates a response message, indicating that the second terminal TC cannot satisfy (or respond to) the first message and associated with the first IP address of the mobile first terminal TM, and orders the home node R1 to transmit (or to route) it to the mobile first terminal TM (which is indicated by the arrow F5). The traffic between the first terminal TM and the second terminal TC can then only pass through the home node R1, where it may then be monitored or analyzed (arrows F6 and F7).

The monitoring device D according to the invention, and in particular its monitoring module MC and its memory means MM, where applicable, may be produced in the form of electronic circuits, software (or electronic data processing) modules, or a combination of circuits and software.

It will be noted that the monitoring device D according to the invention may be responsible for storing or listening to data exchanged by terminals whose IP addresses form part of (or correspond to) the list of IP addresses that relate to it.

The invention is not limited to the monitoring device D and node embodiments described hereinabove by way of example only, and encompasses all variants that the man skilled in the art might envisage within the scope of the following claims.

## Claims

1. Traffic monitoring device (D) for a home node (Rj) constituting in an Internet Protocol (IP) communication network a home agent for at least one mobile first communication terminal (TM) having a first IP address and temporarily attached to a foreign subnetwork (S3), **characterized in that** it comprises monitoring means (MC) adapted, in the case of reception by said home node (R1) of a first message associated with a first source IP address of said mobile first terminal (TM) and a second destination IP address of a second terminal (TC) and requesting the setting up of decentralized traffic between the first terminal (TM) and the second terminal (TC), to verify if said first IP address corresponds to an IP address from a list of chosen IP addresses and, in the case where there is a correspondence, i) to prohibit said home node (R1) from transmitting said first received message to said second destination IP address, ii) to generate a response message indicating that said second terminal (TC) cannot satisfy said first message and associated with a destination IP address equal to said first IP address, and iii) to order said home node (R1) to transmit .said response message to said first IP address.

2. Device according to claim 1, **characterized in that** said monitoring means (MC) are adapted to associate with at least some of the response messages a source IP address equal to said second IP address of the second communication terminal (TC).

3. Device according to either of claims 1 and 2, **characterized in that** said monitoring means (MC) are adapted to monitor first messages of HoTI type.

4. Device according to any one of claims 1 to 3, **characterized in that** said monitoring means (MC) are adapted to generate response messages of ICMP error message type.

5. Device according to claim 4, **characterized in that** said monitoring means (MC) are adapted to generate ICMP error messages including a parameter problem, code 1.

6. Device according to any one of claims 1 to 5, **characterized in that** it comprises memory means (MM) adapted to store said chosen list of IP addresses.

7. Device according to any one of claims 1 to 5. **characterized in that** said monitoring means (MC) are adapted to access memory means installed in said node (R1) and adapted to store said chosen list of IP addresses.

8. Device according to either of claim 6 and 7. **characterized in that** said chosen list of IP addresses is transmitted by a remote application (AP).

9. Node (Rj) for an Internet Protocol (IP) communication network, **characterized in that** it comprises a monitoring device (D) according to any one of the preceding claims.

## Patentansprüche

1. Verkehrsüberwachungsvorrichtung (D) für einen Heimknoten (Rj), welcher in einem auf dem Internet-Protokoll (IP) basierten Kommunikationsnetzwerk einen Heimagenten für mindestens ein mobile erstes Kommunikationsendgerät (TM) mit einer ersten IP-Adresse bildet und vorübergehend an ein fremdes Subnetzwerk (S3) gebunden ist, **dadurch gekennzeichnet, dass** sie Überwachungsmittel (MC) umfasst, die dazu ausgelegt sind, im Fall des Empfangs, an dem besagten Heimknoten (R1), einer ersten Nachricht, die mit einer ersten Quell-IP-Adresse des besagten mobilen ersten Endgerätes (TM) und einer zweiten Ziel-IP-Adresse eines zweiten Endgeräts (TC) assoziiert ist und den Aufbau eines dezentralisierten Verkehrs zwischen dem ersten Endgerät (TM) und dem zweiten Endgerät (TC) anfordert, zu überprüfen, ob die besagte erste IP-Adresse einer IP-Adresse aus einer Liste ausgewählte IP-Adressen entspricht und im Fall einer Übereinstimmung i) den besagten Heimknoten (R1) davon abzuhalten, die besagte empfangene erste Nachricht an die besagte zweite Ziel-IP-Adresse zu übertragen, ii) eine Antwortnachricht zu erzeugen, welche angibt, dass das besagte zweite Endgerät (TC) die besagte erste Nachricht nicht erfüllen kann, und welche mit einer Ziel-IP-Adresse, die mit der besagten ersten IP-Adresse übereinstimmt, assoziiert ist, und iii) dem besagten Heimknoten (R1) zu befehlen, die besagte Antwortnachricht an die besagte erste IP-Adresse zu übertragen.

2. Vorrichtung nach Anspruch 1, **dadurch gekennzeichnet, dass** die besagten Überwachungsmittel (MC) dazu ausgelegt sind, mit mindestens einigen der Antwortnachrichten eine Ouell-IP-Adresse zu assoziieren, welche mit der besagten zweiten IP-Adresse des zweiten Kommunikationsendgeräts (TC) übereinstimmt.

3. Vorrichtung nach einem beliebigen der Ansprüche 1 und 2, **dadurch gekennzeichnet, dass** die besagten Überwachungsmittel (MC) dazu ausgelegt sind, erste Nachrichten vom Typ HoTl zu überwachten.

4. Vorrichtung nach einem beliebigen der Ansprüche 1 bis 3, **dadurch gekennzeichnet, dass** die besagten Überwachungsmittel (MC) dazu ausgelegt sind, Antwortnachrichten vom Typ ICMP-Fehlermeldung zu erzeugen.

5. Vorrichtung nach Anspruch 4, **dadurch gekennzeichnet, dass** die besagten Überwachungsmittel (MC) dazu ausgelegt sind, ICMP-Fehlermeldungsnachrichten zu erzeugen, welche ein Parameterproblem, Code 1, umfassen.

6. Vorrichtung nach einem beliebigen der Ansprüche 1 bis 5, **dadurch gekennzeichnet, dass** sie Speichermittel (MM) umfasst, welche dazu ausgelegt sind, die besagte ausgewählte Liste von IP-Adressen zu speichern.

7. Vorrichtung nach einem beliebigen der Ansprüche 1 bis 5, **dadurch gekennzeichnet, dass** die besagten Überwachungsmittel (MC) dazu ausgelegt sind, auf in dem besagten Knoten (R1) installierte Speichermittel zuzugreifen, und dazu ausgelegt sind, die besagte ausgewählte Liste von IP-Adressen zu speichern.

8. Vorrichtung nach einem beliebigen der Ansprüche 6 und 7, **dadurch gekennzeichnet, dass** die besagte ausgewählte Liste von IP-Adressen durch eine Fernanwendung (AP) übertragen wird,

9. Knoten (Rj) für ein auf dem Internet-Protokoll (IP) basiertes Kommunnikationsnetzwerk, **dadurch gekennzeichnet, dass** er eine Überwachungsvorrichtung (D) gemäß einem beliebigen der vorstehenden Ansprüche umfasst.

## Revendications

1. Dispositif de surveillance du trafic (D) pour un noeud de rattachement (Rj) qui constitue, dans un réseau de communication au protocole Internet (IP), un agent de rattachement pour au moins un premier terminal de communication mobile (TM) ayant une première adresse IP et rattaché temporairement à un sous-réseau étranger (S3), **caractérisé en ce qu'**il comprend des moyens de surveillance (MC) adaptés, dans le cas de la réception par ledit noeud de rattachement (R1), d'un premier message associé à une première adresse IP source dudit premier terminal mobile (TM) et une deuxième adresse IP destinataire d'un deuxième terminal (TC) et demandant l'établissement d'un trafic décentralisé entre le premier terminal (TM) et le deuxième terminal (TC), pour vérifier si ladite première adresse IP correspond à une adresse IP d'une liste d'adresses IP choisies et, dans le cas où il existe une correspondance, i) interdire audit noeud de rattachement (R1) d'émettre ledit premier message reçu à ladite deuxième adresse IP destinataire, ii) générer un message de réponse indiquant que ledit deuxième terminal (TC) ne peut pas satisfaire audit premier message et associé à une adresse IP destinataire égale à ladite première adresse IP, et iii) ordonner audit noeud de rattachement (R1) d'émettre ledit message de réponse à ladite première adresse IP.

2. Dispositif selon la revendication 1, **caractérisé en ce que** lesdits moyens de surveillance (MC) sont adaptés pour associer à au moins certains des messages de réponse une adresse IP source égale à ladite deuxième adresse IP du deuxième terminal de communication (TC).

3. Dispositif selon l'une quelconque des revendications 1 et 2, **caractérisé en ce que** lesdits moyens de surveillance (MC) sont adaptés pour surveiller les premiers messages de type HoTl.

4. Dispositif selon l'une quelconque des revendications 1 à 3, **caractérisé en ce que** lesdits moyens de surveillance (MC) sont adaptés pour générer des messages de réponse du type message d'erreur ICMP,

5. Dispositif selon la revendication 4, **caractérisé en ce que** lesdits moyens de surveillance (MC) sont adaptés pour générer des messages d'erreur ICMP incluant un problème de paramètre, code 1.

6. Dispositif selon l'une quelconque des revendications 1 à 5, **caractérisé en ce qu'**il comprend des moyens de mémorisation (MM) adaptés pour stocker ladite liste choisie d'adresses IP.

7. Dispositif selon l'une quelconque des revendications 1 à 5, **caractérisé en ce que** lesdits moyens de surveillance (MC) sont adaptés pour accéder aux moyens de mémoire installés dans ledit noeud (R1) et adaptés pour stocker ladite liste choisie d'adresses IP.

8. Dispositif selon l'une quelconque des revendications 6 et 7. **caractérisé en ce que** ladite liste choisie d'adresses IP est transmise par une application distante (AP).

9. Noeud (Rj) pour un réseau de communication au protocole Internet (IP), **caractérisé en ce qu'**il comprend un dispositif de surveillance (D) selon l'une quelconque des revendications précédentes,
